# EUROPÄISCHE PATENTSCHRIFT

(11) **EP 0 369 246 B1**
(45) Veröffentlichungstag und Bekanntmachung des Hinweises auf die Patenterteilung: **07.09.1994**
(21) Anmeldenummer: 89120318.4
(22) Anmeldetag: 03.11.1989
(51) Int. Cl.: C08L 1/18, C08B 5/08, C09D 101/18

(54) **Verfahren zur Herstellung phlegmatisierter Nitrocellulosegemische**
Method for preparing phlegmatized nitrocellulose mixtures
Procédé de la fabrication de mélanges de nitrocelluloses stabilisées

(30) Priorität: 15.11.1988 DE 3838646
(43) Veröffentlichungstag der Anmeldung: 23.05.1990
(73) Patentinhaber: Wolff Walsrode Aktiengesellschaft, D-29655 Walsrode (DE)
(72) Erfinder: Hoppe, Lutz, Dr., D-3030 Walsrode (DE); Szablikowski, Klaus, Dr., D-3030 Walsrode (DE); Piepho, Michael, Dr., D-3210 Elze (DE)
(74) Vertreter: Zobel, Manfred, Dr.

(56) Entgegenhaltungen:
- WO-A-88/02743
- BE-A- 781 444
- US-A- 2 109 599

## Beschreibung

Gegenstand der Erfindung ist ein Verfahren zur Herstellung eines Gemisches aus Nitrocellulose und Phlegmatisierungsmitteln.

Nitrocellulose (genauer Cellulosenitrat) ist als ein wesentlicher Bestandteil vieler Lacksysteme bekannt (vgl. z.B. U. Biethan, Lacke und Lösemittel, Verlag Chemie GmbH, Weinheim, 1. Auflage (1979), S. 8). Aus Sicherheitsgründen müssen Nitrocellulose-Typen im Handel grundsätzlich mit einem Phlegmatisierungsmittel versetzt sein. Unter Phlegmatisierungsmittel werden im folgenden gemäß Seite 9 der o.g. Literaturstelle derartige Substanzen verstanden, die den Sprengstoffcharakter trockener Nitrocelluolse herabsetzen.

Ein geeignetes Phlegmatisierungsmittel kann Wasser, ein Alkohol oder ein Weichmacher (z.B. Ester der Phthalsäure) sein (vgl. z.B. K. Fabel, Nitrocellulose, S. Enke-Verlag, 1950). Derartige Phlegmatisierungsmittel können nach unterschiedlichen Methoden in die Nitrocellulose eingearbeitet werden.

Wasser kann in Nitrocellulose über die Zentrifugentechnologie eingearbeitet werden, wobei durch Aufsprühen von Wasser Nitriersäure aus der Nitrocellulose-Herstellung durch Wasser in einer Zentrifuge verdrängt wird (vgl. K. Fabel, Nitrocellulose, S. 100 ff. und US-PS-3 063 981).

Ein Verfahren zur Herstellung von Rußkonzentraten auf Nitrocellulosebasis in Form von Chips unter Zusatz von OH-Gruppen-freien Weichmachern und Harzen wird in der DE-A-3 304 688 beschrieben. Nachteilig an diesem Verfahren ist jedoch, daß geschlossene Apparaturen, wie Kneter oder Extruder mit Knetschnecken verwendet werden. Diese praktisch geschlossenen Aggregate weisen den Nachteil auf, daß im Falle einer durch Reibung erzeugten Zersetzung von Nitrocellulose sich ein Überdruck aufbauen kann, welcher Explosionen bewirken kann. Außerdem wird bei diesem Verfahren stets Ruß mitverwendet.

Ein Verfahren zur Herstellung von Nitrocellulose-Chips ohne die Mitverwendung von Ruß wird in der DE-AS-1 203 652 beschrieben. Das Verfahren arbeitet nicht kontinuierlich, findet in einem geschlossenen Mischer statt und verwendet ausschließlich Weichmacher, die keine Hydroxylgruppen enthalten, z.B. Dibutylphthalat.

Nitrocellulose-Modifikationen, die entweder Alkohol oder Wasser als Phlegmatisierungsmittel enthalten oder Weichmacher, die keine Hydroxylgruppen enthalten, sind nicht in idealer Weise zur Kombination mit Isocyanaten geeignet. Die sich aus derartiger Kombination ergebenden Polyurethanlacke weisen entweder einen zu hohen Gehalt an monofunktionellen Alkoholen auf, die ohne die Ausbildung von Vernetzungsstellen mit Isocyanaten abreagieren, oder sie führen zur Blasenbildung in Folge der Entwicklung von Kohlendioxid aus der Reaktion von Wasser mit Isocyanaten. Bei Verwendung von Chips, die mit Weichmachern phlegmatisiert sind, die keine OH-Gruppen enthalten, kann es zu Ausschwitzerscheinungen der Weichmacher kommen, da diese nicht in das Polyurethannetzwerk eingebaut werden. Derartige Ausschwitzerscheinungen beeinflussen ebenso die Qualität von Polyurethanlackierungen negativ.

Als weitere Möglichkeit zur Herstellung von Nitrocellulose-Angebotsformen, die auch als Bindemittel in Polyurethanlacken geeignet sind, werden in der Literatur Produkte beschrieben, bei denen die Nitrocellulose mit flüchtigen inerten Lösungsmitteln phlegmatisiert ist. In der DE-A 3 041 085 werden Phlegmatisierungsmittel beschrieben, die flüchtig und zumindest teilweise Lösungsmittel für Nitrocellulose sind, so daß die Nitrocellulose-Phlegmatisierungsmittel-Kombinationen homogene Produkte darstellen.

Der Nachteil der Systeme nach der DE-A 3 041 085 ist jedoch, daß die erwähnten inerten gelatinierenden Komponenten (Beispiel: Ethylacetat, Cyclohexanon) bei der Anwendung verdampfen. Aufgrund der Flüchtigkeit der genannten Phlegmatisierungsmittel besteht ein Nachteil der Produkte darin, daß das Lösungsmittel während der Lagerung verdunsten kann. Dadurch erhält man Präparate mit sehr niedrigem oder gar keinem Gehalt an Lösungsmittel, wodurch das Brandrisiko der Nitrocellulosepräparate steigt. Ein weiterer Nachteil liegt in der aufwendigen Herstellung. Um das Wasser aus der Nitrocellulose-Wasser-Phlegmatisierungsmittel-Kombination zu entfernen, ist es erforderlich, das Wasser mit einem azeotropen Schlepper destillativ zu entfernen. Dieser Arbeitsschritt ist aufwendig und gefährlich.

Der vorliegenden Erfindung lag die Aufgabe zugrunde, verbesserte phlegmatisierte Nitrocellulose bereitzustellen, wobei die Nitrocellulose/Phlegmatisierungs-Zubereitungen nahezu wasserfrei sein sollten.

Gegenstand der Erfindung ist ein Verfahren zur Herstellung von Nitrocellulose-Gemischen, die als Phlegmatisierungsmittel einen hydroxylgruppenhaltigen Polyester enthalten, der
a) ein Lösungsmittel für Nitrocellulose ist,
b) in Wasser bei 20°C zu maximal 10 Gew.-% löslich ist
c) nicht flüchtig ist (Verdunstungszahl über 1000) und
der aus wenigstens einer aliphatischen Dicarbonsäure, wenigstens einem Diol und wenigstens einem mehrwertigen Alkohol mit wenigstens drei OH-Gruppen erhältlich ist, durch Verdrängung von der Nitrocellulose anhaftendem Wasser und/oder Alkohol durch Phlegmatisierungsmittel, dadurch gekennzeichnet, daß die Verdrängung von Wasser und/oder Alkohol und Zugabe von Phlegmatisierungsmittel auf einem offenen Doppelschnecken-extruder durchgeführt wird, wobei die Aufgabe einer Mischung aus mit Wasser und/oder Alkohol angefeuchteter Nitrocellulose und Phlegmatisierungsmittel auf eine Hälfte des Walzenaggregats und Entnahme der Nitrocellulose-Phlegmatisierungsmittel-Mischung auf der anderen Hälfte des Walzenaggregats erfolgt.

Überraschend gelingt es mit dem erfindungsgemäßen Verfahren, z.B. im Gegensatz zu BE-A 781 444, nicht-wasserlösliche Polyole in Wasser ohne Emulgator einzutragen.

Aus der US-A 2 109 599 ist es bekannt, zur Herstellung von Mischungen aus Polymethacrylat, Dibutylphthalat und Nitrocellulose bestimmte Kneter einzusetzen. Danach erfolgt eine Weiterbehandlung auf heißen Walzen, die zum Homogenisieren und Verdampfen des Lösungsmittels dienen. Diese umständliche Arbeitsweise wird erfindungsgemäß durch eine kontinuierliche Arbeitsweise ersetzt, bei der Verkneten, Homogenisieren und Trocknen in einem Verfahrensschritt erfolgt.

Unter nicht flüchtigen Polyolen werden derartige verstanden, die eine Verdunstungszahl über 1000 (Diethylether = 1) aufweisen.

Bei den Polyolen P handelt es sich vorzugsweise um Verbindungen mit einer Viskosität von 10 bis 3000 mPa.s, insbesondere von 100 bis 1000 mPa.s, gemessen bei 20°C. Der Hydroxylgehalt der Polyole P beträgt vorzugsweise von 1 bis 20 Gew.-% insbesondere von 3 bis 8 Gew.-%.

In einer besonders bevorzugten Ausführungsform handelt es sich bei den Polyolen P um gegebenenfalls verzweigte hydroxylgruppenhaltige Polyester. Besonders bevorzugte Polyester P sind erhältlich durch Umsetzung wenigstens einer aliphatischen Dicarbonsäure, wenigstens eines Diols und wenigstens eines Alkohols mit mehr als drei OH-Gruppen und gegebenenfalls wenigstens einer mehrwertigen aromatischen Carbonsäure oder Derivaten davon.

Besonders bevorzugte Ausgangsprodukte für erfindungsgemäß zu verwendende Polyester sind:
aliphatische Dicarbonsäuren: Adipinsäure, Bernsteinsäure, Maleinsäure(anhydrid), hydrierte Phthalsäure(anhydrid),
Diole: 1,4-Butylenglykol, 1,2-Propylenglykol, Ethylenglykol, Neopentylglykol,
mehrwertige Alkohole: Hexantriol, Trimethylolpropan, Pentaerythrit, Ricinusöl (ggf. hydriert),
aromatische Carbonsäure (Derivate): Phthalsäureanhydrid und Trimellitsäure(anhydrid).

Zur Erzeugung der Nitrocellulose-Phlegmatisierungsmittel-Kombinationen werden bevorzugt handelsübliche Nitrocellulosetypen unterschiedlicher Viskositätsstufen mit einem Stickstoffgehalt von 10 bis 12,6 % eingesetzt. Der Einsatz von Nitrocellulose mit einem Stickstoffgehalt bis zu 14,14 % (Maximum) ist ebenfalls möglich.

Zusätzlich zu den erfindungsgemäß einzusetzenden Polyol-Phlegmatisierungsmitteln P können auch andere an sich bekannte Phlegmatisierungsmittel eingesetzt werden, beispielsweise Ester der Phthal- oder Adipinsäure, insbesondere Dibutylphthalat. Neben mehrwertigen Alkoholen können auch einwertige Alkohole verwendet werden, z.B. Zitronensäuretributylester oder iso-Buttersäure-2,2-dimethyl-3-hydroxy-4-methylpentylester (Texanol der Fa. Eastman-Kodak). Auch Mischungen aus Phlegmatisierungsmitteln, die Nitrocellulose lösen, und Phlegmatisierungsmittel, die Nitrocellulose nicht lösen, sind einsetzbar, z.B. Mischungen aus Zitronensäureestern und Rizinusöl. Es ist auch möglich, Mischungen zu verwenden, bei denen eine Komponente eine höhere Wasserlöslichkeit als 10 % aufweist. Beispiel: Mischung aus Polyesterpolyol und Tripropylenglykol.

In einer bevorzugten Ausführungsform enthalten die Gemische, bezogen auf das Gesamtgewicht, wenigstens 18 %, insbesondere 18 bis 45 Gew.-% des Polyols P. Wenn zusätzlich zum Polyol P an sich bekannte Phlegmatisierungsmittel zugesetzt werden, werden diese vorzugsweise in einer Menge von 5 bis 15 Gew.-%, bezogen auf das gesamte Gemisch, eingesetzt. Im Falle einer derartigen Abmischung von Phlegmatisierungsmitteln beträgt der gesamte Gehalt an Phlegmatisierungsmitteln vorzugsweise von 18 bis 60, insbesondere von 18 bis 45 Gew.-%.

Das erfindungsgemäße Verfahren wird auf einem Scherwalzenaggregat durchgeführt. Bei dem Scherwalzenaggregat handelt es sich um einen offenen Doppelschneckenextruder mit zwei parallel und horizontal angeordneten Scherwalzen, die gegenläufig arbeiten, wobei das Produkt auf der einen Seite der Walzen aufgegeben und auf der anderen Seite abgenommen wird. Die Walzen sind mit Schernuten ausgerüstet, die den Transport des aufgegebenen Gemisches bewerkstelligt.

Die Breite der Nuten beträgt bevorzugt 5 bis 30 mm, die Tiefe 1 bis 10 mm, der Abstand C zwischen den Nuten 30 bis 300 mm und der Winkel, mit dem die Nuten versetzt zur Rotationsachse der Walzen eingearbeitet sind, 10 bis 80°. Durch diese eingearbeiteten Nuten ist es möglich, das Material auf dem Walzenaggregat von einem Walzenende zum anderen kontinuierlich zu fördern. Die Rohstoffe können separat über Dosieraggregate kontinuierlich in den Walzenspalt gegeben werden.

In einer Ausführungsform gibt man auf eine Hälfte des Walzenaggregats die Mischung aus mit Wasser- bzw. Alkohol-angefeuchteter Nitrocellulose und Phlegmatisierungsmittel (Polyol P); auf der anderen Hälfte des Walzenaggregates wird die Nitrocellulose-Phlegmatisierungsmittel-Mischung, die weniger als 2,5 % Wasser enthält, entnommen. Die Mischung aus angafeuchteter Nitrocellulose und Phlegmatisierungsmittel wird zwischen Aufgabezone und Entnahmezone durch die in die Walzen eingearbeitete Nuten transportiert. Nach Entnahme der Nitrocellulose-Phlegmatisierungsmittel-Mischung von der Walze kann die Masse in Schuppen, Plättchen, Streifen oder Granulate überführt werden. Diese Formkörper können -falls erforderlich - z.B. mit einem handelsüblichen Warmlufttrockner nachgetrocknet werden. Die Schüttdichte der NC-Phlegmatisierungsmittel-Mischung beträgt 500 bis 900 g/l, wohingegen die Schüttdichte der eingesetzten, angefeuchteten Nitrocellulose nur ca. 250 bis 350 g/l beträgt.

Die Einarbeitung des Phlegmatisierungsmittels P bzw. zusätzlicher Phlegmatisierungsmittel kann aber auch in an sich bekannter weise erfolgen durch Aufdüsen des Phlegmatisierungsmittels auf die alkohol- bzw. wasser-feuchte Nitrocellulose in einer kontinuierlich arbeitenden Schubzentrifuge oder in einem konventionellen Knetaggregat.

Die Nitrocellulosegemische mit einem phlegmatisierenden Polyol P werden für die Herstellung von Lacken, insbesondere zur Verwendung in Polyurethanlacken eingesetzt. Bevorzugte derartige Polyurethanlacke sind aufgebaut auf Basis von Polyisocyanaten, Polyolen, inerten organischen Lösemitteln, sowie weiteren Hilfsstoffen wie Beschleunigern, Mattierungsmitteln, Pigmenten, Verlaufhilfsmittel etc.

Zur Herstellung von Polyurethanlacken löst man vorteilhafterweise zuerst die Nitrocellulosegemische in den Lösungsmitteln unter Verwendung handelsüblicher Rühraggregate und gibt dazu die weiteren Lackrohstoffe.

### Beispiel 1

Nitrocellulose vom Normtyp 32 E (angefeuchtet mit 35 % Wasser) wird mittels einer Dosierschnecke kontinuierlich auf ein Scherwalzenaggregat (Länge der Walze: 1500 mm; Durchmesser der Walze: 200 mm) aufgebracht. Gleichzeitig erfolgt die Aufbringung eines hydroxylgruppenhaltigen Polyesters (Desmophen 1200 der Bayer AG, Leverkusen, Viskosität = 250 mPa.s/20 %) in der Weise, daß das Verhältnis zwischen trockener Nitrocellulose und Phlegmatisierungsmittel 7:3 beträgt. Die hintere der beiden Walzen wird auf 130°C thermostatisiert; die vordere auf 80°C. Die Drehzahl der vorderen Walze beträgt 35/min, die der hinteren Walze 27/min. Durchmischung der Nitrocellulose-Phlegmatisierungsmittel-Kombination erfolgt in der Weise, daß die Mischdauer auf der Walze (durchschnittliche Verweilzeit) ca. 3 min beträgt. In die Walzen sind Nuten in der Art und Weise eingearbeitet, daß eine Förderung der Nitrocellulose-Phlegmatisierungsmittel-Mischung von einem Ende der Walzen zur anderen erfolgt. Nachdem die Nitrocellulose-Phlegmatisierungsmittel-Kombination 3 min im Walzenspalt durchmischt und das Wasser ausgepreßt bzw. verdampft wurde, wurde mittels eines Granulierungsaggregates die Nitrocellulose-Phlegmatisierungsmittel-Mischung von der vorderen Walze abgenommen und granuliert. Der Restwassergehalt des Granulats betrug 1,5 %.

### Anwendung:

(1) Es wurden 6 g des erhaltenen Nitrocellulose-Granulates mit 4 g des Polyols P1 in 15 ml Butylacetat gelöst. Das Polyol P1 hat folgende Kennzahlen:

| | |
|---|---|
| Hydroxylgehalt: | ca. 5,2 % |
| Dichte bei 20°C nach DIN 51 757: | ca. 1,12 g/cm³ |
| Viskosität bei 20°C: | 300±50 mPa.s |

Es handelt sich bei dem Polyol P1 um einen hydroxylgruppenhaltigen verzweigten Polyester (Desmophen® 1200).
Durch Zugabe von 8 g Hexamethylendiisocyanat-Präpolymer (75 % Festkörper, gelöst in 1-Methoxypropylacetat-2/Xylol = 1/1) wurde ein reaktiver Zweikomponenten-Polyurethanlack mit einer Topfzeit >12 h und einem Festkörpergehalt von 48 % erhalten. Beschichtungen, erhalten aus 90 µm dicken Naßfilmen auf Glas, waren nach 48 h kratzfest und hatten eine Pendelhärte nach König (DIN 53 157) von 35 s.
(2) Durch Zugabe von 12 g eines Isocyanat-Präpolymeren auf Basis von Toluylendiisocyanat und Hexamethylendiisocyanat (Desmodur® HL der Bayer AG mit 60 % Festkörper, gelöst in Butylacetat) erhält man einen reaktiven Polyurethanlack mit einer Topfzeit bei 25°C von 30 min und einem Festkörpergehalt von 46 %. Nach Beschichten einer Glasplatte (90 µm Naßfilmdicke) und Verdampfen des Lösungsmittels härtet der Lack bei 25°C in weniger als 1 h zu einem klebfreien Film aus, dessen Pendelhärte, gemessen nach 24 h, 180 s beträgt.

Die Lacke nach (1) und (2) enthalten nach Aushärtung keine meßbaren mit Butylacetat extrahierbaren Anteile. Bei der Beschichtung von Holz zeigen die Lacke eine sehr gute Anfeuerung, einen guten Porenfluß und gute Kratzfestigkeit. Topfzeit und Härte der Beschichtungen sind durch Mischung der Isocyanate in weiten Bereichen steuerbar.

## Patentansprüche

1. Verfahren zur Herstellung von Nitrocellulose-Gemischen, die als Phlegmatisierungsmittel einen hydroxylgruppenhaltigen Polyester enthalten, der
a) ein Lösungsmittel für Nitrocellulose ist,
b) in Wasser bei 20°C zu maximal 10 Gew.-% löslich ist
c) nicht flüchtig ist (Verdunstungszahl über 1000) und
der aus Wenigstens einer aliphatischen Dicarbonsäure, Wenigstens einem Diol und Wenigstens einem mehrwertigen Alkohol mit wenigstens drei OH-Gruppen erhältlich ist, durch Verdrängung von der Nitrocellulose anhaftendem Wasser und/oder Alkohol durch Phlegmatisierungsmittel, dadurch gekennzeichnet, daß die Verdrängung von Wasser und/oder Alkohol und Zugabe von Phlegmatisierungsmittel auf einem offenen Doppelschneckenextruder durchgeführt wird, wobei die Aufgabe einer Mischung aus mit Wasser und/oder Alkohol angefeuchteter Nitrocellulose und Phlegmatisierungsmittel auf eine Hälfte des Walzenaggregats und Entnahme der Nitrocellulose-Phlegmatisierungsmittel-Mischung auf der anderen Hälfte des Walzenaggregats erfolgt.

2. Verfahren nach Anspruch 1, dadurch gekennzeichnet, daß als aliphatische Dicarbonsäure Adipinsäure eingesetzt wird.

3. Verfahren nach Anspruch 1 oder 2, dadurch gekennzeichnet, daß als Diol Propylenglykol oder Butylenglykol eingesetzt wird.

4. Verfahren nach einem der Ansprüche 1 - 3, dadurch gekennzeichnet, daß als mehrwertiger Alkohol Trimethylolpropan oder Hexantriol eingesetzt wird

## Claims

1. A process for preparing nitrocellulose mixtures which contain a polyester which contains hydroxyl groups as a desensitising agent which
a) is a solvent for nitrocellulose,
b) is a maximum of 10 wt.% soluble in water at 20°C,
c) is not volatile (relative evaporation rate more than 1000) and
which is obtainable from at least one aliphatic dicarboxylic acid, at least one diol and at least one polyhydric alcohol with at least three OH groups, by displacing adherent water and/or alcohol from the nitrocellulose with the desensitising agent, characterised in that displacement of water and/or alcohol and addition of desensitising agent is performed in an open twin screw extruder, wherein feeding a mixture of nitrocellulose, moistened with water and/or alcohol, and desensitising agent takes place in one half of the roller unit and discharging the nitrocellulose/desensitising agent mixture takes place in the other half of the roller unit.

2. A process according to Claim 1, characterised in that adipic acid is used as an aliphatic dicarboxylic acid.

3. A process according to Claims 1 or 2, characterised in that propylene glycol or butylene glycol is used as a diol.

4. A process according to one of Claims 1 -3, characterised in that trimethylolpropane or hexanetriol is used as a polyhydric alcohol.

## Revendications

1. Procédé pour préparer des nitrocelluloses mélangées contenant en tant qu'agent flegmatisant un polyester à groupes hydroxy qui
a) est un solvant de la nitrocellulose,
b) est soluble dans l'eau à 20°C en proportion maximale de 10 % en poids,
c) est non volatil (indice d'évaporation supérieur à 1000) et
qui peut être obtenu à partir d'au moins un acide dicarboxylique aliphatique, au moins un diol et au moins un alcool polyvalent à au moins trois groupes OH, procédé dans lequel on chasse l'eau et/ou l'alcool adhérant à la nitrocellulose par l'agent flegmatisant, le procédé se caractérisant en ce que l'expulsion de l'eau et/ou de l'alcool et l'addition de l'agent flegmatisant sont réalisées sur une extrudeuse ouverte à double vis, l'introduction d'un mélange de la nitrocellulose humidifiée par l'eau et/ou l'alcool et de l'agent flegmatisant étant réalisée sur une moitié du système de cylindres et le prélèvement du mélange nitrocellulose-agent flegmatisant sur l'autre moitié du système de cylindres.

2. Procédé selon la revendication 1, caractérisé en ce que l'acide dicarboxylique aliphatique utilisé est l'acide adipique.

3. Procédé selon la revendication 1 ou 2, caractérisé en ce que le diol utilisé est le propylèneglycol ou le butylèneglycol.

4. Procédé selon l'une des revendications 1 à 3, caractérisé en ce que l'alcool polyvalent utilisé est le triméthylolpropane ou l'hexanetriol.
